(19) **Europäisches Patentamt**

**European Patent Office**

**Office européen des brevets**

(11) **EP 0 639 383 B1**

(12) **EUROPEAN PATENT SPECIFICATION**

(45) Date of publication and mention
of the grant of the patent:
**03.06.1998 Bulletin 1998/23**

(51) Int. Cl.$^6$: **A61M 1/20**, A61M 1/18,
B01D 63/02, B29C 63/18,
B65B 11/00

(21) Application number: **94111217.9**

(22) Date of filing: **16.07.1994**

(54) **Method of wrapping a bundle of fiber**

Methode zur Umhüllung eines Faserbündels

Méthode d'enrobage d'un faisceau de fibre

(84) Designated Contracting States:
**DE**

(30) Priority: **20.08.1993 JP 228253/93**

(43) Date of publication of application:
**22.02.1995 Bulletin 1995/08**

(73) Proprietor: **NISSHO CORPORATION
Osaka-shi (JP)**

(72) Inventor: **Sano, Kazuhiko
Kusatsu-shi, shiga-ken (JP)**

(74) Representative:
**Türk, Gille, Hrabal, Leifert
Brucknerstrasse 20
40593 Düsseldorf (DE)**

(56) References cited:
GB-A- 1 175 689          US-A- 4 276 687
US-A- 5 064 496

- PATENT ABSTRACTS OF JAPAN vol. 9 no. 184
  (C-294) ,30 July 1985 & JP-A-60 054711 (TORAY
  KK) 29 March 1985,
- PATENT ABSTRACTS OF JAPAN vol. 8 no. 156
  (C-234) [1593] ,19 July 1984 & JP-A-59 059218
  (TEIJIN KK) 5 April 1984,
- PATENT ABSTRACTS OF JAPAN vol. 10 no. 262
  (C-371) ,6 September 1986 & JP-A-61 086906
  (JGC CORP) 2 May 1986,

**Description**

The present invention relates to a method of wrapping a bundle of fiber, and more particularly relates to a method of wrapping a bundle of hollow fiber so as to subsequently fill a tube with the bundle, wherein the hollow fiber is such as widely used in the field of blood treatment, reverse osmosis, heat exchange or the like.

Usually, fiber bundles have been cut into predetermined lengths to be accommodated in tubes or cylindrical containers. For protection of the bundles from damage during the cutting and insertion processes, each bundle has been wrapped with a protective sheet before cut into the lengths. Such a method is described in US-A-4 276 687.

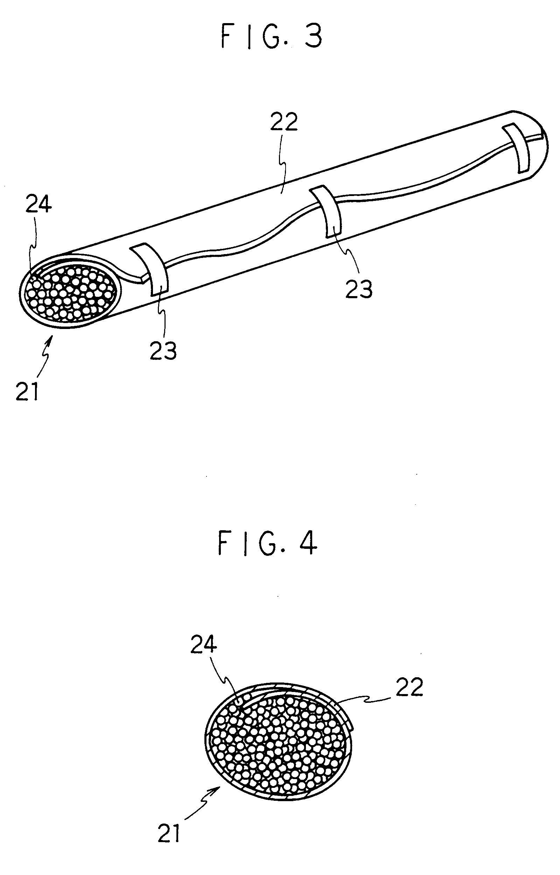

Fig. 3 shows a fiber bundle 21 enclosed with a sheet 22, and Fig. 4 is a cross section thereof. The protective sheet 22 is tightened and a longitudinal edge thereof is anchored to a body portion of the sheet at several portions by some lengths of a one-side adhesive tape 23.

When winding the sheet 22 on the fiber bundle 21, some hollow fibers 24 included in an outer layer thereof tend to be jammed in the piled portions of the sheet. The jammed fibers 24 are likely to be damaged, bent and/or broken not only during the wrapping step but also while inserting the bundle 21 together with the sheet 22 into the container. In use of a hollow fiber apparatus, the damaged hollow fibers 24 in the bundle have caused certain serious problems such as a leakage of blood flowing through the fibers.

Therefore, the wrapping of hollow fiber bundle 21 with the sheet 22 have had to be carried out carefully to avoid the jamming of fibers 24. If such a jamming is found in an already wrapped bundle 21, it must be repaired manually. The repairing work has thus rendered production efficiency low.

A few pieces of the one-side adhesive tape 23 fastening the sheet edge have not been enough to ensure a smooth transportation of the bundles on an assembly line. This is because some curled edges of the sheet often have collided or interfered with any objects or parts present along the line.

The bundles 21 simply wrapped with the sheets 22 have not been of an invariable shape but of a somewhat depressed shape in cross section. Thus, it has not been easy to set those bundles in coaxial alignment with the containers in hollow fiber apparatuses.

A further method for wrapping a fiber bundle so as to insert the bundle into a cylindrical case is described in US-A-5 064 496. The bundle is wrapped there with an endless belt taking a cylindrical form by overlapping of the longitudinal belt edges. The belt is then unfolded and the fibers are released before being loaded into the cylindrical case. Jamming and nipping of the fibers can occur at the overlapping belt edges.

An object of the present invention, which was made to resolve those problems inherent in the prior art method, is therefore to provide an improved method of wrapping a bundle of fiber.

The method proposed herein comprises the preliminary step of applying a predetermined tension to the bundle longitudinally thereof and at opposite ends of the bundle. The present method characteristically comprises the further steps of: wrapping a flexible tape helically around the bundle and from one of the opposite ends towards the other end so that the tape covers the bundle almost entirely, while maintaining the tension preliminarily applied thereto; and finally unwinding the tape off the bundle so as to expose the bundle gradually from the other end towards the one end, while synchronously inserting the thus exposed portion of the bundle gradually into a cylindrical protector.

Now, an embodiment of the present invention will be described referring to the drawings, in which:

Fig. 1 is a schematic side elevation of a system in which a tape is wound on a hollow fiber bundle;

Fig. 2 also shows the system in its state to unwind the tape and to insert the bundle into a cylindrical protector;

Fig. 3 is a perspective view of a hollow fiber bundle wrapped by the prior art method; and

Fig. 4 is a cross section of the bundle shown in Fig. 3.

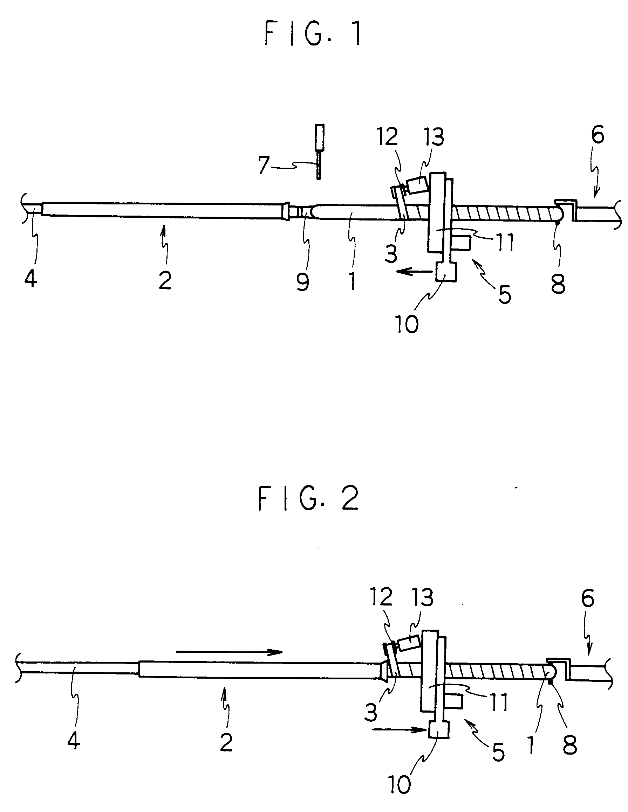

In an embodiment shown in Figs. 1 and 2, a system for performing the steps comprises a bundle 1 of hollow fiber, a cylindrical protector 2 and a tape 3. The system further comprises a rod 4 for supporting the protector, a taping unit 5 and a tension unit 6 for applying a predetermined tension to the fiber bundle.

At first, an engaging pin 7 is placed through one of opposite ends (i.e., left-hand end in the drawings) of the hollow fiber bundle 1. A further engaging pin 8 of the tension unit 6 is then caused to engage with the other end (i.e., right-hand end) of the bundle. Then, the further pin 8 is pulled to the right by a pneumatic cylinder (not shown) in the tension unit 6, whereby a predetermined tension is applied to the bundle 1, longitudinally thereof. The rod 4 extends away from and in axial alignment with the fiber bundle 1 and supports thereon the cylindrical protector 2.

The protector 2 is usually made of a thermoplastic resin such as polypropylene, and generally has a wall thickness of about 0.35 mm. The protector may be transparent or translucent so that the interior thereof can be seen through its wall. An inner peripheral surface of the protector is preferably satin-finished or otherwise roughened to allow the fiber bundle to slide smoothly.

Subsequent to the described preliminary step, the tape is wound around the fiber bundle 1 in a manner as shown in Fig. 1. In detail, a string joint 9 is secured to the left-hand end of the bundle and to a right-hand end of the protector-supporting rod 4, and then the engaging pin 7 is removed from the left-hand end of the bundle 1. The joint 9 may for example be a string loop or a pair of strings engageable with or knottable to the end of the rod 4. Then, a rotary and annular head 11 on a movable stand 10 of the taping unit 5 takes a start position causing the head 11 to surround the right-hand end of fiber bundle 1. A free end of the tape 3 wound around a reel 12 on the head is removably fixed to the bundle 1, at its portion adjacent to the right-hand end. The tape 3 is made of polyethylene, polyfluoride resin, polypropylene, polyvinyl chloride, polyvinylidene chloride or the like. Next, a motor (not shown) starts to drive the rotary and annular head 11 to the left while spinning about its own axis. Thus, the tape unwound from a reel 12 is wound in a helical manner on the bundle 1, over a full length of the bundle 1 except for its opposite ends. A torque motor 13 operatively connecting the reel 12 to the head 11 is controlled to regulate the tension of the tape 3.

After the tape 3 has wrapped the hollow fiber bundle 1, the protector 2 held on the rod 4 is driven to the right a little distance. Thus, the right-hand end of the protector 2 fits on the left-hand bare end of the bundle 1, as shown in Fig. 2. Then, the head 11 of the taping unit 5 starts to rotate in reverse direction contrary to that shown in Fig. 1. Synchronously with the rotation of the head 11, the movable stand 10 driven by the motor advances to the right. Due to such synchronous motions of the head 11 and stand 10, the tape 3 is continuously unwound from its last and left-hand turn back to its first and right-hand turn so as to gradually expose the bundle 1, while inserting at the same time the thus exposed portion of the bundle 1 gradually into the cylindrical protector 2. The torque motor 13 continues to operate the reel 12 to maintain the tension of the tape at a desired level, similarly to the step shown in Fig. 1. The tape's free end removably fixed to the bundle's right-hand end is ready to slip off it, thus enabling the hollow fiber bundle 1 to be covered entirely with the protector 2. In a subsequent casing process, the bundle 1 in the protector 2 is axially aligned with a cylindrical container in a hollow fiber apparatus. It will be understood that the method described above is applicable also to the wrapping of fiber bundles other than the the hollow fiber bundle.

In summary, the method comprises the step of helically winding a tape around the bundle entirely from one end thereof towards the other end, while urging these ends in opposite directions to maintain the longitudinal tension. Subsequently, the tape is unwound from the bundle which is thus exposed gradually from the other end towards the one or basal end, while synchronously inserting the thus exposed portion of the bundle gradually into a cylindrical protector.

EXAMPLES 1 TO 3

Three examples of bundles were prepared. Example 1 comprised hollow fibers, the number of which was "A". Examples 2 and 3 respectively comprised "A - 500" and "A + 500" fibers. All the Examples had almost the same outer diameter of the bundle in which the fibers were packed, and this diameter was maintained during the tape winding and unwinding steps. A tape was wound on and unwound from each Example under tensions, which are shown in Table 1 together with the values of "packed ratio" given below by the equation (1).

$$\text{Packed ratio of fiber bundle} = [\{(\text{Cross-sectional area defined by outer periphery of one fiber}) \times \text{number of fibers}\}/(\text{cross-sectional area defined by inner periphery of a cylindrical protector})] \times 100 \qquad (1)$$

Table 1

| Examples | Winding tension (g) | Unwinding tension (g) | Packed ratio (%) |
|---|---|---|---|
| 1 | 500 | 200 | 45 |
| 2 | 300 | 200 | 42 |
| 3 | 700 | 200 | 47 |

As can be seen from Table 1, the increasing number of the fibers packed in one bundle caused a higher winding tension of the tape and a higher packed ratio of the fibers. However, the tape unwinding tension remained the same to assure the same outer diameter of the bundles.

According to the present invention, the outer diameter of the fiber bundle can be kept almost constant even if the number of wrapped fibers per bundle would vary within a little range. Such a constant bundle diameter is realized due to the adjustment of the winding and unwinding tensions of tape. Thus the cylindrical protector of a given inner diameter can receive and hold a variable number of fibers, so that a wider use of the protector is realized. The wrapping operation would scarcely damage the fibers, thereby diminishing a possibility that a fluid such as blood leaks sideways from the fibers installed in a hollow fiber apparatus. Further, any later and manual adjustment of the already wrapped bundles is no longer necessary, thus improving the production efficiency.

## Claims

1. A method of wrapping a bundle of fiber comprising the steps of:

   applying a predetermined tension to the bundle [1] longitudinally thereof and at opposite ends of the bundle; then wrapping a tape [3] helically around the bundle [1] and from one of the opposite ends towards the other end so that the tape covers the bundle almost entirely, while maintaining the tension applied thereto; and finally unwinding the tape [3] off the bundle [1] so as to expose the bundle gradually from the other end towards the one end, while inserting the thus exposed portion of the bundle gradually into a cylindrical protector [2].

2. The method of Claim 1, wherein the winding and unwinding of the tape [3] is carried out by a taping unit [5] which comprises a rotary and annular head [11] reciprocating along and surrounding the bundle [1], a reel [12] for feeding the tape [3] to the bundle [1] and taking up the tape therefrom, and a torque motor [13] connecting the reel [12] to the annular head [11] and adjusting the tension of the tape [3] which is being wound or unwound.

## Patentansprüche

1. Methode zur Umhüllung von einem Faserbündel, die folgende Schritte umfaßt:

   Aufbringung einer vorbestimmten Spannung auf das Faserbündel (1) in dessen Längsrichtung und an gegenüberliegenden Enden dieses Bündels; anschließend schraubenförmiges Wickeln eines Bandes (3) um das Bündel (1) ausgehend von einem der gegenüberliegenden Enden gegen das andere Ende in einer Weise, daß das Band das Bündel fast vollständig umhüllt, während die aufgebrachte Spannung gehalten wird; und schließlich Abwickeln des Bandes (3) von dem Bündel (1) in einer Weise, daß das Bündel allmählich ab dem zweiten Ende in Richtung des ersten Endes freigelegt wird, während der so freigelegte Teil des Bündels allmählich in eine zylindrische Schutzvorrichtung (2) eingeschoben wird.

2. Methode nach Anspruch 1,
   **dadurch gekennzeichnet, daß**
   das Aufwickeln und Abwickeln des Bandes (3) mit Hilfe einer Bandablageeinheit (5) durchgeführt wird, welche einen rotierenden ringförmigen Kopf (11) aufweist, der sich in Längsrichtung rund um das Bündels (1) hin- und herbewegt, sowie eine Spule (12) für die Zufuhr des Bandes (3) zu dem Bündel (1) vorgesehen ist, die das Band aufnimmt, und daß ein Vorschubmotor (13) vorgesehen ist, welcher die Spule (12) mit dem ringförmigen Kopf (11) verbindet und die Spannung des Bandes (3) regelt, welches auf- oder abgewickelt wird.

## Revendications

1. Méthode d'enrobage d'un faisceau de fibres comprenant les étapes suivantes:

   application d'une tension prédéterminée sur le faisceau (1) en direction longitudinale et aux extrémités opposées de celui-ci; ensuite enrobage hélicoïdal d'une bande (3) autour du faisceau (1) entre l'une des extrémités opposées et l'autre des extrémités opposées de telle sorte que la bande couvre pratiquement entièrement le faisceau, tandisque la tension appliquée sur le faisceau est maintenue; et finalement déroulement de la bande (3) du faisceau (1) de telle sorte que le faisceau est progressivement exposé entre l'une des extrémités et l'autre des extrémités, tandisque la section ainsi exposée du faisceau est progressivement insérée dans un protecteur cylindrique (2).

2. Méthode suivant la revendication 1,
   **caractérisé en ce que**
   l'enrobage et le déroulement de la bande (3) sont réalisés au moyen d'une unité d'enrobage (5) comprenant une tête (11) rotative annulaire se déplaçant en vaet-vient autour dudit faisceau (1), et en ce qu'il est prévu un rouleau (12) d'amenée de la bande (3) vers le faisceau (1) qui reçoit la bande de celui-ci, et en ce qu'il est prévu un moteur d'avance (13) connectant le rouleau (12) à la tête annulaire (11) et réglant la tension de la bande (3) qui est enroulée ou déroulée.

FIG. 1

FIG. 2

FIG. 3

FIG. 4